# EUROPEAN PATENT APPLICATION

(11) **EP 3 438 694 A1**
(43) Date of publication of application: **06.02.2019**
(21) Application number: 17773848.1
(22) Date of filing: 21.02.2017
(51) Int. Cl.: G01S 13/87, G01S 13/95, G01S 19/14, H01Q 3/08

(54) **ANTENNA DEVICE, RADAR SYSTEM, AND ANTENNA ROTATION METHOD**

(30) Priority: 31.03.2016 JP 2016072083
(71) Applicant: Furuno Electric Co., Ltd., Nishinomiya-City, Hyogo 662-8580 (JP)
(72) Inventor: ASADA, Yasunobu, Nishinomiya-City Hyogo 662-8580 (JP)
(74) Representative: Müller Hoffmann & Partner
(86) International application number: PCT/JP2017/006318
(87) International publication number: WO 2017/169300

(57) **Abstract**

The purpose is to reduce interference of a radio wave transmitted from an antenna with other radio waves. An antenna device 8a is provided, which may include a rotatable antenna 10, a time information acquirer 24, an antenna rotation start reference time setter 32, a periodic signal acquirer 22, and a rotation control processor 33a. The time information acquirer 24 may acquire time information. The antenna rotation start reference time setter 32 may set an antenna rotation start reference time based on the time information. The periodic signal acquirer 22 may acquire a periodic signal repeated at a constant cycle larger than a time error of the time information. The rotation control processor 33a may determine a rotation start timing at which the antenna starts rotating, based on the antenna rotation start reference time and the periodic signal.

## Description

### TECHNICAL FIELD

The present disclosure relates to an antenna device provided with an antenna, a radar system provided with the antenna device, and a method of rotating the antenna.

### BACKGROUND ART

Conventionally, various measures have been taken so that a radio wave transmitted from an antenna device does not interfere with radio waves transmitted from other antenna devices.

For example, a radar apparatus disclosed in Patent Document 1 controls so that transmitting power of the radio wave increases under a given condition, or controls a transmitting timing of a pulse of the radio wave. Thus, the interference with other radar apparatuses is avoided.

Moreover, a radar apparatus disclosed in Patent Document 2 utilizes the frequency hopping and, thus, the influence of interference is reduced.

Moreover, a synchronous rotating device (antenna device) of an antenna disclosed in Patent Document 3 synchronizes a rotation angle of the antenna by using radio broadcasting waves, for example, of a radio-controlled clock. Thus, it is avoided that radio waves from a plurality of antennas interfere with each other.

Moreover, a system disclosed in Patent Document 4 transmits a radio wave so that radio waves emitted from a plurality of radar antennas interfere with each other, after a delay time set to a peculiar value to each radar.

### [Reference Documents of Conventional Art]

### [Patent Documents]

[Patent Document 1] JP2004-325130A
[Patent Document 2] JP2005-195450A
[Patent Document 3] JP2006-003304A
[Patent Document 4] JP2010-204054A

### DESCRIPTION OF THE DISCLOSURE

### [Problems to be Solved by the Disclosure]

Meanwhile, in order to avoid the interferences of the radio waves transmitted from the plurality of antennas, the measures described above may be insufficient.

The present disclosure is to solve the problems, and one purpose thereof is to reduce interference of a radio wave transmitted from an antenna with other radio waves.

### [Summary of the Disclosure]

(1) In order to solve the problems described above, according to one aspect of the present disclosure, an antenna device is provided, which may include a rotatable antenna, a time information acquirer, an antenna rotation start reference time setter, a periodic signal acquirer, and a rotation control processor. The time information acquirer may acquire time information. The antenna rotation start reference time setter may set an antenna rotation start reference time based on the time information. The periodic signal acquirer may acquire a periodic signal repeated at a constant cycle larger than a time error of the time information. The rotation control processor may determine a rotation start timing at which the antenna starts rotating, based on the antenna rotation start reference time and the periodic signal.
(2) The time information may be acquired based on a positioning signal acquired from a positioning satellite.
(3) The periodic signal may be a PPS signal generated based on a positioning signal acquired from a positioning satellite. The rotation control processor may determine the rotation start timing based on the antenna rotation start reference time and the PPS signal.
(4) The rotation start timing may be a timing at which the PPS signal becomes ON before or after the antenna rotation start reference time.
(5) The rotation start timing may be a timing at which the PPS signal becomes ON immediately after the antenna rotation start reference time.
(6) The antenna device may further include a clock signal generator configured to generate a clock signal of which a cycle is shorter than the PPS signal, based on the positioning signal. The rotation control processor may control rotation of a rotation mechanism of the antenna based on the clock signal.
(7) The antenna device may further include a set time acceptor configured to accept a rotation start timing of the antenna desired by a user as a set time. The antenna rotation start reference time setter may set the antenna rotation start reference time based on the set time in addition to the time information.
(8) In order to solve the problems described above, according to another aspect of the present disclosure, a radar system is provided which may include a plurality of radar apparatuses, each having the antenna device of any one of described above, and a signal processor configured to process an echo signal generated based on an echo from a target object, that is received by an antenna of the antenna device. The antennas provided to the respective radar apparatuses may be directed so that transmitting and receiving directions of the antennas are other than mutually 0° or 180° when the rotation is started.
(9) The antennas before the rotation is started may be set so that the transmitting and receiving directions are set other than mutually 0° or 180°. The rotation control processors of the antenna devices may start the rotation of the antennas simultaneously.
(10) The antennas before the rotation is started may be set so that the transmitting and receiving directions become in the same direction. The rotation control processors of the antenna devices may start the rotation of the antennas so that start timings are offset from each other.
(11) The plurality of radar apparatuses may be weather radar apparatuses configured to detect waterfall.
(12) In order to solve the problems described above, according to another aspect of the present disclosure, a method of rotating an antenna is provided, which may include acquiring time information, setting an antenna rotation start reference time based on the time information, acquiring a periodic signal repeated at a constant cycle larger than a time error of the time information, determining a rotation start timing based on the antenna rotation start reference time and the periodic signal, and starting the rotation of the antenna at the rotation start timing.

### [Effect of the Disclosure]

According to the present disclosure, the interference of the radio wave transmitted from the antenna with other radio waves is reduced.

### BRIEF DESCRIPTION OF DRAWINGS

Fig. 1 is a view illustrating a weather radar system according to one embodiment of the present disclosure, seen from above, where a planar spatial relationship of three weather radar apparatuses provided to the weather radar system is illustrated.
Fig. 2 is a block diagram illustrating a configuration of the weather radar system according to this embodiment.
Fig. 3 is a block diagram illustrating a configuration of an antenna device illustrated in Fig. 2.
Fig. 4 is a schematic view illustrating a PPS signal and a time information signal so as to correspond to each other on a time axis.
Fig. 5 is a flowchart illustrating operation of the antenna device illustrated in Fig. 2.
Fig. 6 is a block diagram illustrating a configuration of an antenna device provided to each weather radar apparatus of the weather radar system, according to one modification.
Fig. 7 is a block diagram illustrating a configuration of a weather radar system according to one modification.
Fig. 8 is a block diagram illustrating a configuration of a weather radar system to which the antenna device according to the embodiment of the present disclosure is applied.
Fig. 9 is a schematic view illustrating a direction of a radar antenna provided to each weather radar apparatus of one embodiment, and a rotation start timing of each radar antenna.

### MODE FOR CARRYING OUT THE DISCLOSURE

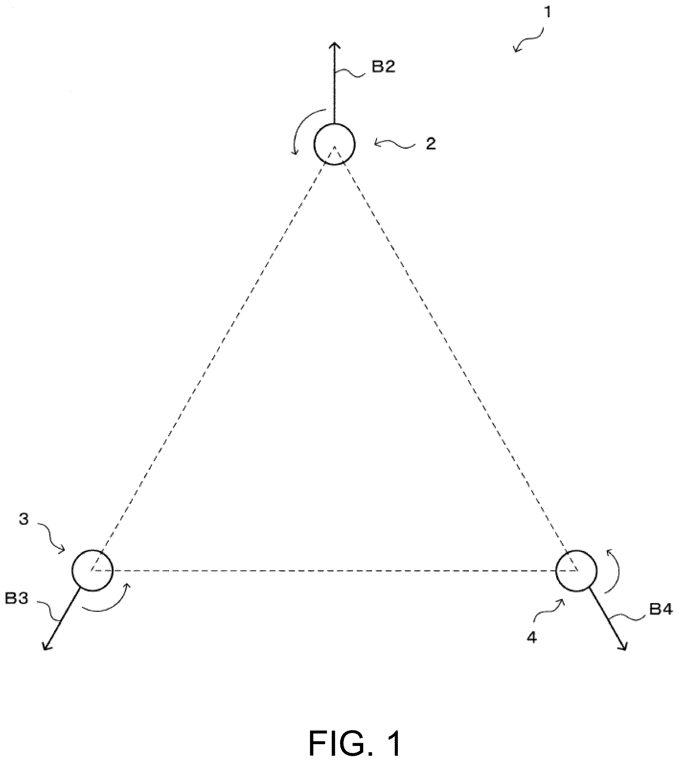

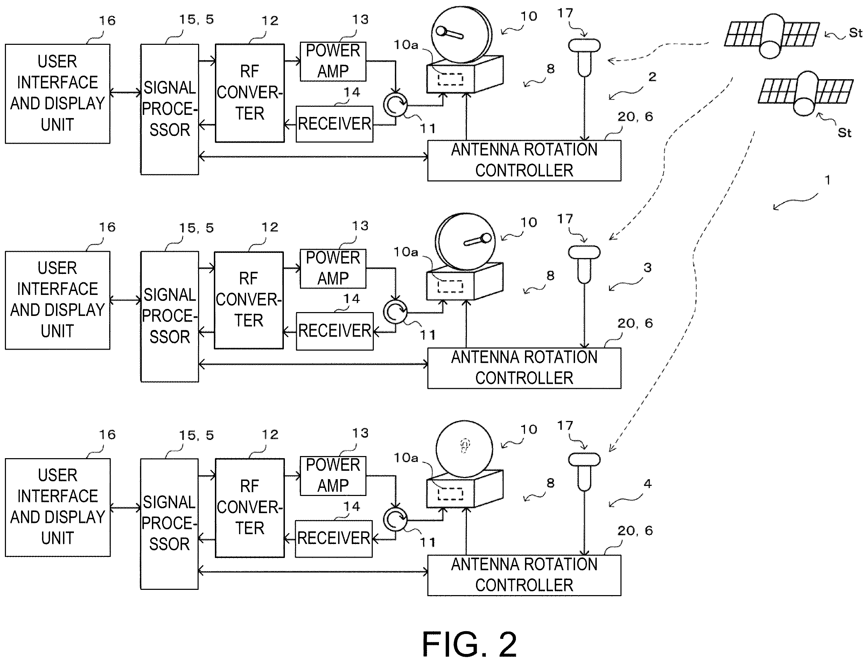

Fig. 1 is a view illustrating a weather radar system 1 according to one embodiment of the present disclosure, seen from above, where a planar spatial relationship of three weather radar apparatuses 2, 3 and 4 provided to the weather radar system 1. Fig. 2 is a block diagram illustrating a configuration of the weather radar system 1 according to this embodiment.

In the weather radar system 1 illustrated in Figs. 1 and 2, each of the weather radar apparatuses 2, 3 and 4 may be disposed at mutually different locations. Each of the weather radar apparatuses 2, 3 and 4 may be configured to be calculatable of a waterfall intensity at each geographical point within an observation area centering on the apparatus. That is, the weather radar system 1 according to this embodiment may be capable of calculating the waterfall intensity of a comparatively wide range of area which cannot be covered by a single radar apparatus. Note that the term "waterfall" may refer to that moisture falls from sky to the ground, such as rain, snow, hail, and sleet. Moreover, in the following description, these target objects of the waterfall may be referred to as the "waterfall target object. Below, the weather radar system 1 according to the embodiment of the present disclosure is described with reference to the drawings.

The weather radar system 1 according to this embodiment may be provided with the three weather radar apparatuses 2, 3 and 4. Referring to Fig. 1, each of the weather radar apparatuses 2, 3 and 4 may be disposed, as one example, at a location corresponding to each vertex of an equilateral triangle of which one side is 30km. However, the locations where the weather radar apparatuses 2, 3 and 4 are disposed are not limited to these locations, and may be disposed at other locations.

### [Configuration of Radar Apparatus]

Each of the weather radar apparatuses 2, 3 and 4 may have the same configuration. For example, with reference to Fig. 2, each of the weather radar apparatuses 2, 3 and 4 may include an antenna device 8, a circulator 11, an RF converter 12, a power amplifier 13, a receiver 14, a signal processor 15, a user interface and display unit 16, and a GPS antenna 17. The antenna device 8 may have a radar antenna 10 and an antenna rotation controller 20.

The radar antenna 10 may be an antenna capable of transmitting a transmission wave with a narrow directivity. Moreover, the radar antenna 10 may be configured so as to be receivable of a reception wave. Each of the weather radar apparatuses 2, 3 and 4 may measure a period of time from a transmission of the transmission wave to a reception of the reception wave. Thus, each of the weather radar apparatuses 2, 3 and 4 may be capable of detecting a distance r to the waterfall target object.

The radar antenna 10 may have an electric motor 10a as a rotation mechanism. The radar antenna 10 may be capable of rotating by 360° along the horizontal plane when the electric motor 10a rotates and drives the radar antenna 10. Moreover, the radar antenna 10 may be configured so that its angle of elevation ϕ can change within a range of 0° to 180°. The radar antenna 10 may be configured to repeat the transmission and reception of the transmission and reception waves, while changing a direction in which the radar antenna 10 transmits and receives the transmission and reception waves (e.g., an azimuth θ and the angle of elevation ϕ).

Moreover, from the radar antenna 10 to the signal processor 15 through the antenna rotation controller 20, data indicative of which direction the radar antenna 10 is currently directed may be outputted. As a result, when each of the weather radar apparatuses 2, 3 and 4 reads out the reception wave, it may be capable of acquiring a location at which the reception wave arrived, by polar coordinates comprised of the distance r, the azimuth θ, and the angle of elevation ϕ. Note that, although illustration is omitted, the azimuth θ and the angle of elevation ϕ of the radar antenna 10 may be measured by providing a rotary encoder, a reed switch, an optical sensor, etc. to the radar antenna 10.

With the above configuration, since the weather radar apparatuses 2, 3 and 4 disposed at mutually different locations are capable of detecting the perimeters of the weather radar apparatuses 2, 3 and 4 in a hemispherical manner, respectively, the weather radar system 1 may be capable of observing the waterfall over the comparatively broad range, as described above.

Moreover, the radar antennas 10 may be set so that directions of beams B2, B3 and B4 (see Fig. 1) are mutually spread with an interval of 120° in the initial state (e.g., a state before the weather radar system 1 is booted). When the weather radar system 1 is booted, the radar antennas 10 may start the rotation simultaneously by the electric motors 10a, and rotate along the horizontal plane in the same direction (the counterclockwise direction in Fig. 1) and at the same angular velocity.

Then, the weather radar system 1 may determine the rotation start timing of each radar antenna 10 based on information acquired from GPS (Global Positioning System) which is a public system. In addition, the weather radar system 1 may perform a rotation control of each radar antenna 10 based on the information acquired from GPS. Thus, the radar antennas 10 can be synchronized with sufficient accuracy, while the mutual directional interval of the beams B2, B3 and B4 which are formed by the respective radar antennas 10 (see Fig. 1) is maintained at 120°. This will be described later in detail.

The circulator 11 may be configured to output a transmission signal outputted from the power amplifier 13 to the radar antenna 10. In addition, the circulator 11 may be configured to output a reception signal acquired from the reception wave received by the radar antenna 10 to the RF converter 12 through the receiver 14. The receiver 14 may perform an amplification etc. of the reception signal from the circulator 11 and output the amplified reception signal to the RF converter 12.

The RF converter 12 may upconvert the transmission signal generated by the signal processor 15 to a given RF frequency and output it to the power amplifier 13. The power amplifier 13 may amplify the transmission signal and then output it to the circulator 11. Moreover, the RF converter 12 may downconvert the reception signal outputted from the receiver 14 to an IF frequency and then output it to the signal processor 15.

The signal processor 15 may calculate the waterfall intensity at each geographical point within an observation area where each of the weather radar apparatuses 2, 3 and 4 is capable of observing the waterfall, by processing the signal from the RF converter 12. For example, the signal processor 15 may calculate the waterfall intensity at each geographical point based on an echo intensity of the reception signal acquired from the geographical point. The signal processor 15 may be comprised of devices, such as a hardware processor 5 (e.g., a CPU, an FPGA, etc.) and a nonvolatile memory. For example, the signal processor 15 may be capable of calculating the waterfall intensity at each geographical point by the CPU reading a program from the nonvolatile memory and executing the program.

The user interface and display unit 16 may include a console panel (not illustrated) which can be operated by a user. The user may operate the console panel to operate the weather radar apparatuses 2, 3 and 4. Moreover, the user interface and display unit 16 may display a radar image generated based on the waterfall intensities at every geographical point calculated by the signal processor 15.

Moreover, the user may suitably operate the user interface and display unit 16 to set a set time tₛₑₜ which is a time at which the user wants to start the rotation of the radar antennas 10.

The GPS antenna 17 may receive a radio wave from a GPS Satellite St (see Fig. 2) as a positioning satellite, as a GPS signal. The GPS signal as the positioning signal received by the GPS antenna 17 may be outputted to the antenna rotation controller 20.

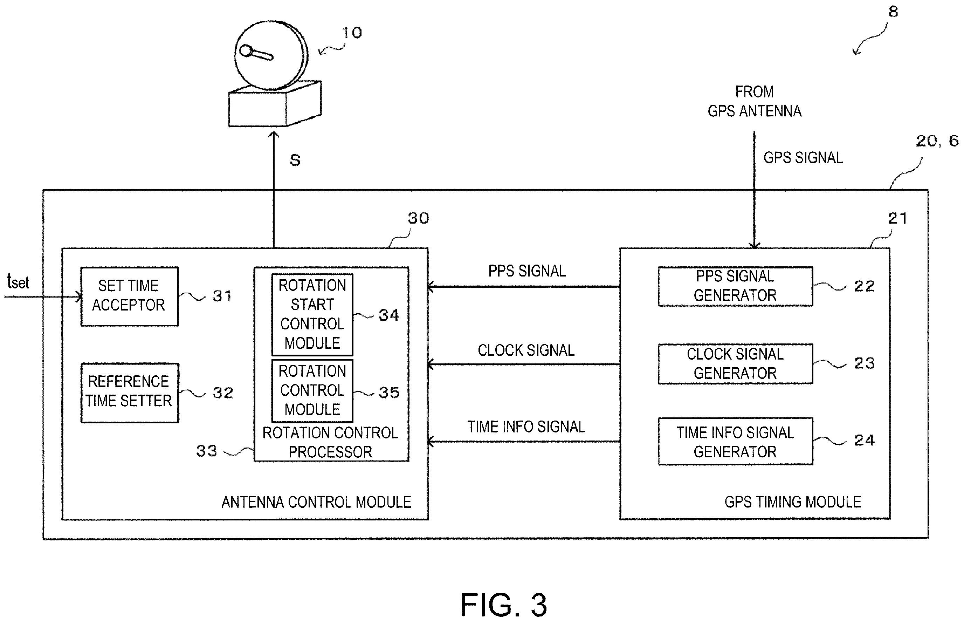

Fig. 3 is a block diagram illustrating a configuration of the antenna device 8 illustrated in Fig. 2. The antenna rotation controller 20 provided to the antenna device 8 may include a GPS timing module 21 and an antenna control module 30.

The antenna rotation controller 20 may be comprised of devices, such as a hardware processor 6 (e.g., a CPU, an FPGA, etc.) and a nonvolatile memory, similar to the case of the signal processor 15. For example, the antenna rotation controller 20 may be capable of functioning as the GPS timing module 21 and the antenna control module 30 by the CPU reading the program from the nonvolatile memory and executing the program. Note that the GPS timing module 21 and the antenna control module 30 may be provided separately, or the antenna control module 30 comprised of a single chip may be implemented on a substrate of the GPS timing module 21.

The GPS timing module 21 may include a PPS signal generator 22 as a periodic signal acquirer, a clock signal generator 23, and a time information signal generator 24 as a time signal acquirer.

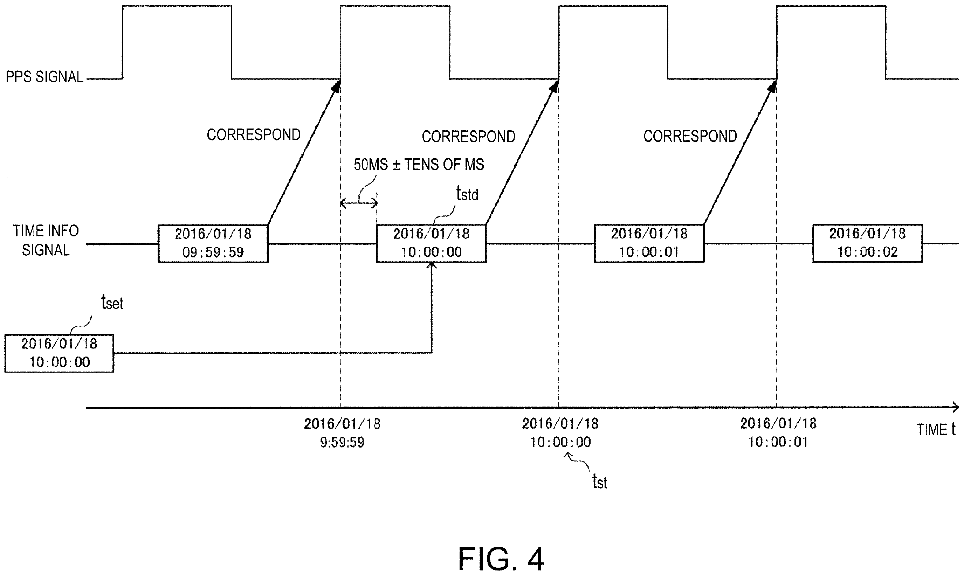

Fig. 4 is a schematic view illustrating the PPS signal and the time information signal which are inputted into the antenna control module so as to correspond to each other on a time axis.

The PPS signal generator 22 may generate the PPS signal as a periodic signal which is repeated at a constant cycle, based on the GPS signal acquired from the GPS antenna 17. As illustrated in Fig. 4, the PPS signal may be a signal having a rectangular-shaped pulse wave which is repeated at a cycle of 1 second, where a periodic error of the pulse wave is very small. The PPS signal generated by the PPS signal generator 22 may be outputted to the antenna control module 30.

The clock signal generator 23 may generate a clock signal based on the GPS signal acquired from the GPS antenna 17. The clock signal may be a signal having a rectangular-shaped pulse wave which is repeated at a cycle shorter than the PPS signal. Since the clock signal is generated, for example, based on the PPS signal, a periodic error of the pulse wave may be very small, similar to the case of the PPS signal. The clock signal generated by the clock signal generator 23 may be outputted to the antenna control module 30.

The time information signal generator 24 may generate a time information signal, at a cycle of 1 second, based on the GPS signal acquired from the GPS antenna 17. The time information signal generated by the time information signal generator 24 may be outputted to the antenna control module 30.

Note that, each time information signal inputted into the antenna control module may be outputted to the antenna control module 30 from the GPS timing module 21 so that a time of a rising portion of the pulse shape of the PPS signal inputted into the antenna control module at the latest after the time information which the time information signal has is inputted, becomes a time which the time information signal has. Describing concretely with reference to Fig. 4, the time information signal having information on 10:00:00, January 18, 2016 as the time information may be inputted into the antenna control module 30 after 50ms from the rising time of the pulse shape of the PPS signal corresponding to the time information signal having the time information which is 1 second before the time (09:59:59, January 18, 2016). Note that the time error of the time information signal may be about tens of milliseconds (ms), and is smaller than 1 second which is the cycle of the PPS signal.

The antenna control module 30 may include a set time acceptor 31, a reference time setter 32 as an antenna rotation start reference time setter, and a rotation control processor 33.

The set time acceptor 31 may accept the set time tₛₑₜ set by the user.

The reference time setter 32 may set a reference time t_{std} as the antenna rotation start reference time which is a time used as a reference time at which the radar antenna 10 starts the rotation. In this embodiment, the reference time setter 32 may set the same time as the set time tₛₑₜ accepted by the set time acceptor 31 as the reference time t_{std}.

The rotation control processor 33 may include a rotation start control module 34 and a rotation control module 35.

The rotation start control module 34 may output a rotation start signal S to the electric motor 10a which the radar antenna 10 has, at a timing of the PPS signal being ON immediately after the time information signal having the same time as the reference time t_{std} as information is accepted (in other words, at a timing of the PPS signal being a high level), and the electric motor 10a which received the rotation start signal S may immediately rotate and drive. That is, the timing at which the PPS signal described above becomes ON may be the rotation start timing tₛₜ at which the electric motor 10a starts rotating. Thus, when the radar antennas 10 reach the rotation start timing tₛₜ, they then may start rotating simultaneously along the horizontal plane.

The rotation control module 35 may control the rotation of the electric motor 10a which each radar antenna 10 has. For example, the rotation control module 35 may rotate the electric motor 10a comprised of a stepping motor based on a pulse of a highly-accurate clock signal generated by the clock signal generator 23. For example, the rotation control module 35 may rotate the electric motor 10a by one step each time it receives the pulse of the highly-accurate clock signal. Thus, the electric motors 10a may rotate by the same step width at the same timing. That is, with reference to Fig. 1, the radar antennas 10 may rotate, while the mutual angle intervals of beams B2, B3 and B4 which are formed by the respective weather radar apparatuses 2, 3 and 4 are maintained at 120°.

### [Operation of Antenna Device]

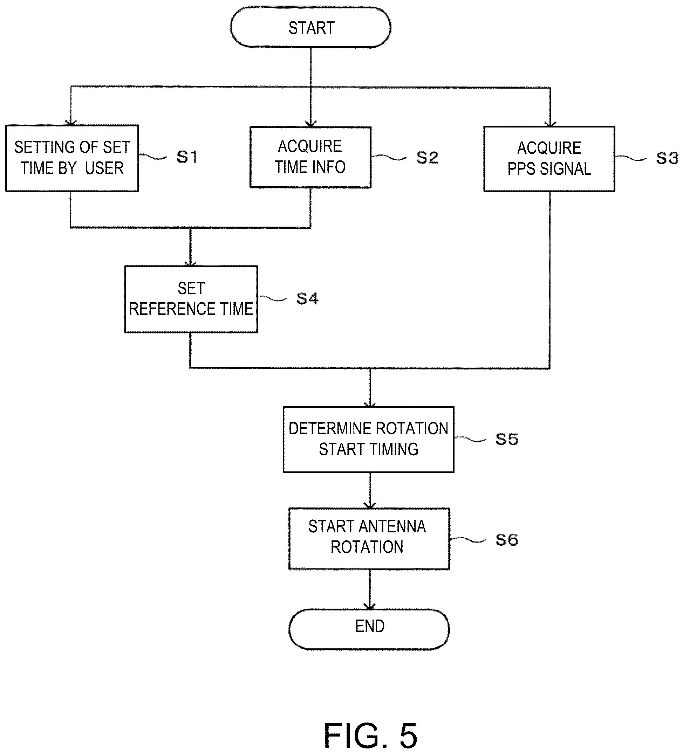

Fig. 5 is a flowchart illustrating operation of the antenna device 8 illustrated in Fig. 2. Below, a method of rotating the antenna performed when the radar antenna 10 is rotated by the antenna device 8 is described using Fig. 5. Note that, here, steps until the radar antenna 10 rotates are described.

First, at Step S1, the setting of the set time tₛₑₜ by the user may be performed. The set time tₛₑₜ which is set by the user may be accepted by the set time acceptor 31.

At Step S2, before or after Step S1, or in parallel to Step S1, the time information signal may be generated by the time information signal generator 24.

At Step S3, before or after Steps S1 and S2, or in parallel to these steps, the PPS signal may be generated by the PPS signal generator 22.

After Steps S1 and S2, at Step S4, the reference time t_{std} may be set by the reference time setter 32.

After Steps S3 and S4, at Step S5, the rotation start timing tₛₜ may be determined by the rotation start control module 34.

Next, at Step S6, the radar antenna 10 may start the rotation at the rotation start timing tₛₜ.

### [Effects]

As described above, the antenna device 8 of the weather radar system 1, and the method of rotating the antenna using the antenna device 8 according to this embodiment may determine the rotation start timing tₛₜ of the radar antenna 10 based on the reference time t_{std} and the periodic signal (in this embodiment, the PPS signal). Thus, since the rotation start timing tₛₜ can be determined based on more information compared with the case where, for example, the rotation start timing tₛₜ is determined only using the reference time t_{std}, the rotation start timing tₛₜ can be determined more accurately. Moreover, according to the antenna device 8, for example, even if there is an error between the time when the reference time t_{std} is received and an actual time, it may be possible to accurately coincide the time with the actual time by the periodic signal. Therefore, it can be avoided that the directions of the beams B2, B3 and B4 become in agreement with each other or become opposed to each other due to the rotation start timing tₛₜ offsetting from a desired time.

Therefore, according to the antenna device 8 and the method of rotating the antenna, the interference of the radio wave transmitted from the antenna (e.g., the radar antenna 10 of the weather radar apparatus 2) with other radio waves (e.g., the radio waves transmitted from the radar antennas 10 of the weather radar apparatuses 3 and 4) may be reduced.

Moreover, according to the antenna device 8, time information can be acquired comparatively easily based on the positioning signal (in this embodiment, the GPS signal) acquired from the positioning satellite (in this embodiment, the GPS Satellite St).

Moreover, according to the antenna device 8, the rotation start timing tₛₜ can be set based on the highly-precise PPS signal with a very small error of the time interval between the rising portions of the pulses which are adjacent in time. Thus, the rotation start timing tₛₜ can be determined more accurately.

Moreover, with reference to Fig. 4, the antenna device 8 may determine the timing at which the PPS signal becomes ON immediately after the reference time t_{std}, as the rotation start timing tₛₜ. In GPS, at the time indicated by the time information (with reference to Fig. 4, for example, 10:00:00 on January 18, 2016) which the time information signal has, the PPS signal immediately after the time information signal may rise. Thus, according to the antenna device 8, since the rotation start timing tₛₜ can be coincided with the reference time t_{std} set based on the set time tₛₑₜ with sufficient accuracy, the rotation start timing tₛₜ can be coincided highly accurately with the set time tₛₑₜ.

Moreover, according to the antenna device 8, since the rotation of the stepping motor is controlled based on the highly-accurate clock signal acquired from the GPS signal, the plurality of radar antennas 10 can simultaneous be rotated accurately by the same angle.

Moreover, according to the antenna device 8, the reference time t_{std} is determined based on the set time tₛₑₜ which is set by the user. Thus, the reference time t_{std} can be set to the desired time.

Moreover, according to the weather radar system 1, the radar system provided with the antenna device 8 which can reduce the interference of the radio wave transmitted from the antenna with the radio waves transmitted from other antennas can be provided.

Moreover, in the weather radar system 1, the directions of the beams B2, B3 and B4 of the radar antennas 10 may be other than mutually 0° or 180° when the rotation starts. Thus, since it is avoided that the radar antennas 10 become in the same direction or in the opposing directions during operation of the weather radar system 1, the interference between the radio waves transmitted from the radar antennas 10 may be reduced more certainly.

Moreover, in the weather radar system 1, the radar antennas 10 before the rotational operation by the respective antenna rotation controllers 20 may be set so that the directions of the beams B2, B3 and B4 become directions other than mutually 0° or 180°. Then, in the weather radar system 1, the antenna rotation controllers 20 may simultaneously start the rotation of the corresponding radar antennas 10. Thus, it can certainly be avoided that the directions of the radar antennas 10 become in the same direction or in the opposing directions during the operation of the weather radar system 1.

Moreover, in the weather radar system 1, since the waterfall intensity at each geographical point is calculated by the plurality of weather radar apparatuses 2, 3 and 4 with the reduced interference between the radio waves transmitted from the weather radar apparatuses 2, 3 and 4, the system 1 can accurately calculate the waterfall intensity over the wide range of area.

### [Modifications]

Although the embodiment of the present disclosure is described above, the present disclosure is not limited to this embodiment but may be changed variously without departing from the scope of the present disclosure.

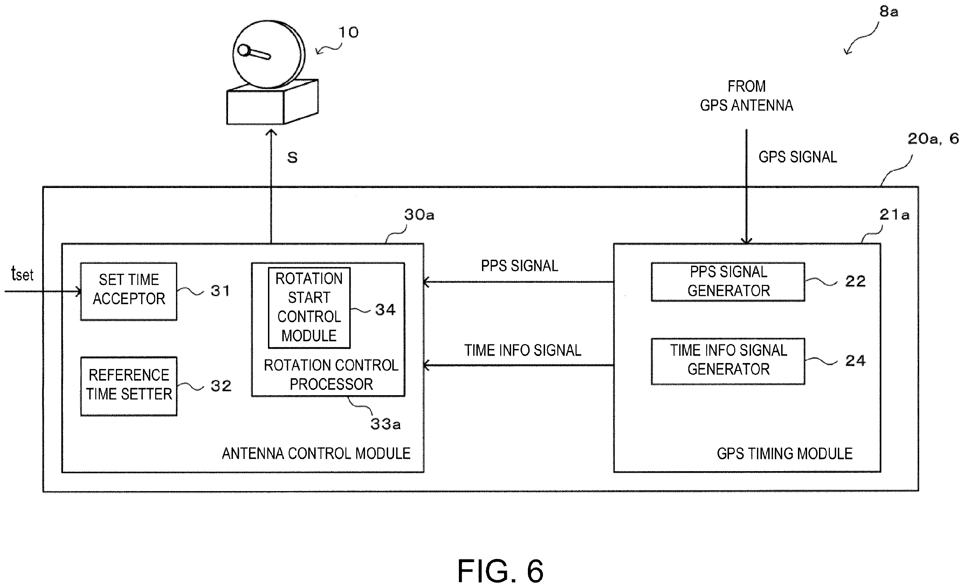

(1) Fig. 6 is a block diagram illustrating a configuration of an antenna device 8a which each weather radar apparatus of the weather radar system according to one modification has. Although the example in which the rotation of the radar antenna 10 is controlled based on the clock signal acquired from the GPS signal is described in the above embodiment, the present disclosure is not limited to this configuration. For example, in this modification, the rotation of the radar antenna 10 may not be controlled based on the clock signal acquired from the GPS signal, but the rotation of the radar antenna 10 may be controlled for every weather radar apparatus (2, 3 and 4). Even in this case, similar to the above embodiment, since the rotation start timings tₛₜ of the radar antennas 10 can accurately be coincided with each other, the interference of the radio wave transmitted from the antenna with the radio waves transmitted from other antennas may be reduced.

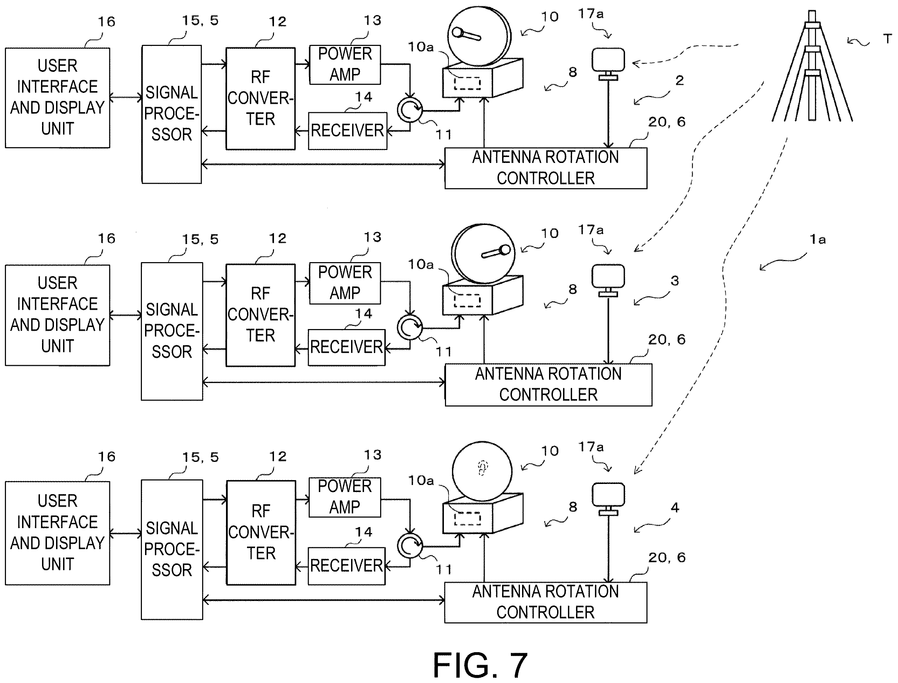

Moreover, according to this modification, compared with the case of the above embodiment, a GPS timing module 21a may be configured such that the clock signal generator 23 is omitted, and a rotation control processor 33a of an antenna control module 30a may be configured such that the rotation control module 35 is omitted. Thus, the configuration of the weather radar system may be simplified compared with the above embodiment.
(2) Although in the above embodiment and modification, the rotation of the radar antenna 10 is started using the GPS signal acquired from GPS as the public system, the rotation of the radar antenna 10 may be started based on a signal acquired from other public systems, without limiting to the GPS signal. For example, like a weather radar system 1a illustrated in Fig. 7, the rotation of the radar antenna 10 may be started based on a signal received by a standard radio wave antenna 17a which receives a reference frequency transmitted from a reference frequency transmitting station T which transmits the reference frequency. Alternatively, the rotation of the radar antenna 10 may be started based on a signal acquired from positioning systems other than GPS (e.g., GLONASS), or NTP (Network Time Protocol). Even in this case, similar to the above embodiment, since the rotation start timing tₛₜ and the set time tₛₑₜ of the radar antenna 10 can accurately be corresponded with each other, the interference of the radio wave transmitted from the antenna with other radio waves may be reduced.

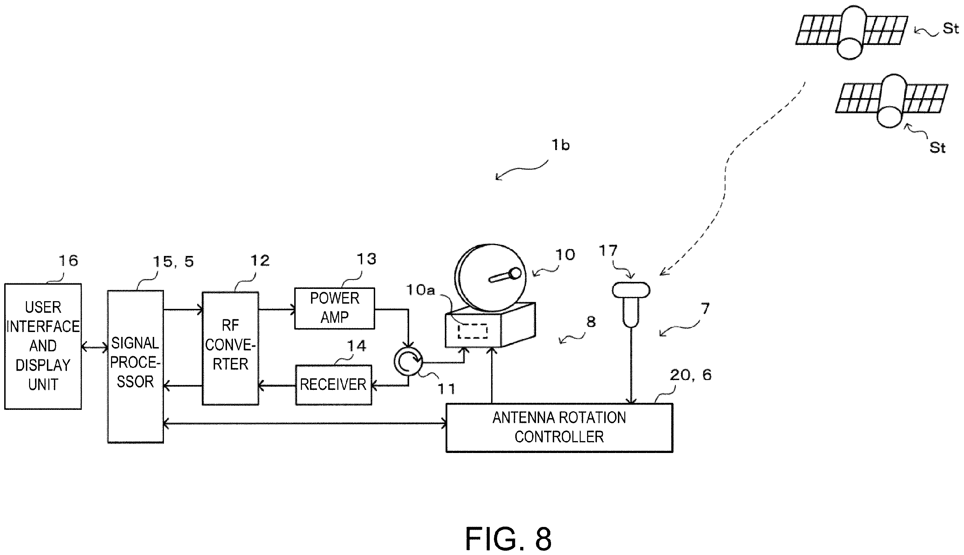

(3) Fig. 8 is a block diagram illustrating a configuration of a weather radar system 1b to which the antenna device 8 according to the embodiment of the present disclosure is applied. Although in the above embodiment the example in which the antenna device 8 is applied to the weather radar system 1 having the plurality of weather radar apparatuses 2, 3 and 4 is described, the present disclosure is not limited to this configuration. For example, the antenna device 8 according to the present disclosure can also be applied to the weather radar system 1b having a single weather radar apparatus 7 as illustrated in Fig. 8. Even in this case, the rotation start timing tₛₜ of the weather radar apparatus 7 can accurately be determined. Thus, if the directions of the beams of other radar apparatuses (not illustrated) at a certain time are able to be grasped, the rotation time of the antenna concerned can accurately be determined so that the antenna concerned and the antennas of other radar apparatuses are not directed in the same direction or in the opposing directions. Thus, it can be avoided that the radio wave from the weather radar apparatus 7 interferes with the radio waves transmitted from other radar apparatuses. Note that, since the configuration of the weather radar apparatus 7 illustrated in Fig. 8 is the same as the weather radar apparatuses 2, 3 and 4 of the above embodiment, description thereof is omitted.

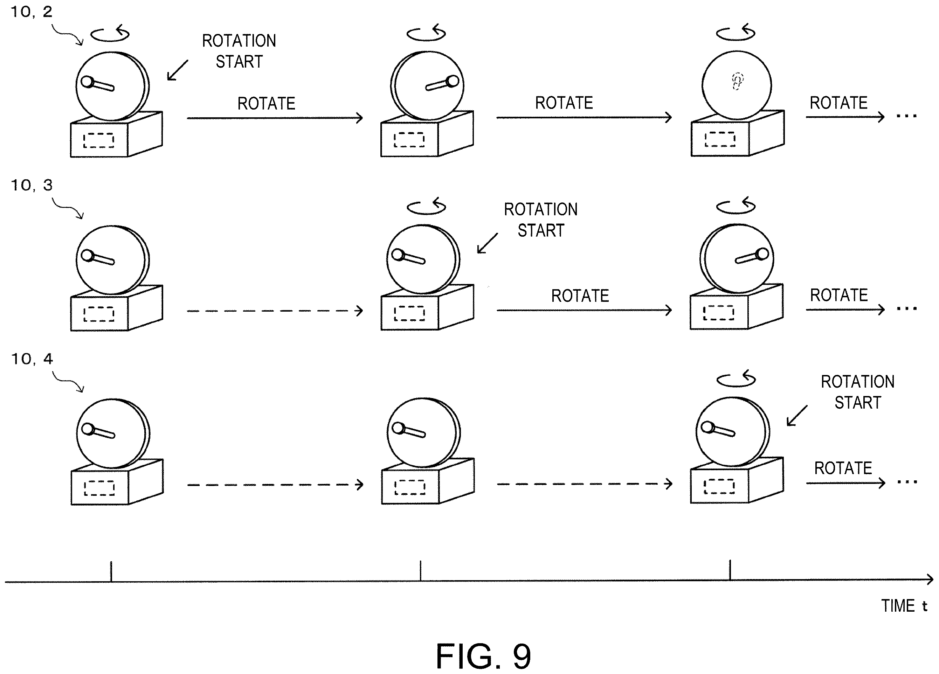

(4) Fig. 9 is a schematic view illustrating directions of the radar antennas 10 which the weather radar apparatuses 2, 3 and 4 of the above embodiment have, and the rotation start timings of the radar antennas 10.

Although in the above embodiment the example in which the radar antennas 10 are rotated at the same timing in the state where the radar antennas 10 are set so that the mutual directional interval of the radar antennas 10 becomes 120°, the present disclosure is not limited to this configuration. For example, with reference to Fig. 9, in a state where the directions of the radar antennas 10 of the weather radar apparatuses 2, 3 and 4 become in the same direction, the radar antennas 10 may be rotated at different timings. Even in this case, since it is avoidable of transmitting and receiving the radio waves in the state where the directions of the radar antennas 10 are in the same direction or the opposing directions, the mutual interferences of the radio waves from the radar antennas 10 may be prevented.
(5) In the above embodiment, with reference to Fig. 4, although the rising of the PPS signal immediately after the reference time t_{std} is determined as the rotation start timing tₛₜ, the present disclosure is not limited to this configuration. For example, the rising of the PPS signal before the reference time t_{std} may be determined as the rotation start timing tₛₜ, or the rising of the PPS signal after the plurality of reference times t_{std} may be determined as the rotation start timing tₛₜ.
(6) Although in the above embodiment and modifications the example in which the antenna rotation controller according to the present disclosure is applied to the weather radar system is described, they may be also applicable to other apparatuses and systems, without limiting to the configuration. For example, they may be also applicable to ship radars.
(7) In the above embodiment the example in which the electric motor 10a of each radar antenna 10 is comprised of the stepping motor is described. However, a normal motor which is not the stepping motor may also be used as the electric motor, without limiting to the configuration. In this case, the rotation control module may control a duty ratio of a drive pulse of the electric motor based on a highly-accurate clock signal. Thus, since the duty ratios for setting the rotating speeds of the electric motors are in agreement with each other highly accurately, the electric motors can be synchronously rotated highly accurately.
(8) Although in the above embodiment the time information is generated based on the GPS signal, the present disclosure is not limited to this configuration. For example, the time information used for each radar apparatus may be generated based on a clock which the user has. Even in this case, similar to the above embodiment, since the rotation start timings of the radar antennas can accurately be coincided with each other, the interference of the radio wave transmitted from the antenna with the radio waves transmitted from other antennas may be reduced.
(9) Although in the above embodiment the PPS signal is used as the periodic signal, other periodic signals may also be used without limiting to this configuration. In this case, by using a periodic signal at a cycle which is larger than the time error of the time information signal and is substantially constant repeated with a time error smaller than the time error of the time information signal, the interference of the radio wave transmitted from the antenna with the radio waves transmitted from other antennas may be reduced, similar to the above embodiment.
(10) Although in the above embodiment the example in which the PPS signal is generated based on the GPS signal is described, the present disclosure is not limited to this configuration. For example, the PPS signal may be generated based on the positioning signal acquired from the positioning systems other than GPS.
(11) Although in the above embodiment the clock signal generated based on the GPS signal is used in order to synchronously rotate the radar antennas 10, the way to generate the clock signal may be arbitrary as long as the clock signal has a highly-accurate clock frequency. For example, the clock signal may be generated based on the positioning signal acquired from the positioning systems other than the GPS system, or the clock signal with an improved accuracy may be generated by, for example, compensating a certain reference signal.

### DESCRIPTION OF REFERENCE CHARACTERS

- 1, 1a: Weather Radar System
- 2, 3, 4, 7: Weather Radar Apparatus
- 8, 8a: Antenna Device
- 10: Radar Antenna (Antenna)
- 20, 20a, 20b: Antenna Rotation Controller
- 31: Set Time Acceptor
- 32: Reference Time Setter
- 33, 33a, 33b: Rotation Control Processor

## Claims

1. An antenna device, comprising:
a rotatable antenna;
a time information acquirer configured to acquire time information;
an antenna rotation start reference time setter configured to set an antenna rotation start reference time based on the time information;
a periodic signal acquirer configured to acquire a periodic signal repeated at a constant cycle larger than a time error of the time information; and
a rotation control processor configured to determine a rotation start timing at which the antenna starts rotating, based on the antenna rotation start reference time and the periodic signal.

2. The antenna device of claim 1, wherein the time information is acquired based on a positioning signal acquired from a positioning satellite.

3. The antenna device of claim 1 or 2, wherein the periodic signal is a PPS signal generated based on a positioning signal acquired from a positioning satellite, and
wherein the rotation control processor determines the rotation start timing based on the antenna rotation start reference time and the PPS signal.

4. The antenna device of claim 3, wherein the rotation start timing is a timing at which the PPS signal becomes ON before or after the antenna rotation start reference time.

5. The antenna device of claim 4, wherein the rotation start timing is a timing at which the PPS signal becomes ON immediately after the antenna rotation start reference time.

6. The antenna device of any one of claims 3 to 5, further comprising a clock signal generator configured to generate a clock signal of which a cycle is shorter than the PPS signal, based on the positioning signal,
wherein the rotation control processor controls rotation of a rotation mechanism of the antenna based on the clock signal.

7. The antenna device of any one of claims 1 to 6, further comprising a set time acceptor configured to accept a rotation start timing of the antenna desired by a user as a set time,
wherein the antenna rotation start reference time setter sets the antenna rotation start reference time based on the set time in addition to the time information.

8. A radar system comprising a plurality of radar apparatuses, each having the antenna device of any one of claims 1 to 7, and a signal processor configured to process an echo signal generated based on an echo from a target object, that is received by an antenna of the antenna device,
wherein the antennas provided to the respective radar apparatuses are directed so that transmitting and receiving directions of the antennas are other than mutually 0° or 180° when the rotation is started.

9. The radar system of claim 8, wherein the antennas before the rotation is started is set so that the transmitting and receiving directions are set other than mutually 0° or 180°, and
wherein the rotation control processors of the antenna devices start the rotation of the antennas simultaneously.

10. The radar system of claim 8, wherein the antennas before the rotation is started is set so that the transmitting and receiving directions become in the same direction, and
wherein the rotation control processors of the antenna devices start the rotation of the antennas so that start timings are offset from each other.

11. The radar system of any one of claims 8 to 10, wherein the plurality of radar apparatuses are weather radar apparatuses configured to detect waterfall.

12. A method of rotating an antenna, comprising:
acquiring time information;
setting an antenna rotation start reference time based on the time information;
acquiring a periodic signal repeated at a constant cycle larger than a time error of the time information;
determining a rotation start timing based on the antenna rotation start reference time and the periodic signal; and
starting the rotation of the antenna at the rotation start timing.
